# EUROPEAN PATENT SPECIFICATION

(11) **EP 2 186 710 B1**
(45) Date of publication and mention of the grant of the patent: **03.10.2012**
(21) Application number: 09175629.6
(22) Date of filing: 11.11.2009
(51) Int. Cl.: B62D 5/097, B62D 5/32, F15B 18/00

(54) **A hydrostatic steering device**
Hydrostatische Lenkvorrichtung
Dispositif de direction hydrostatique

(30) Priority: 11.11.2008 IT RE20080106
(43) Date of publication of application: 19.05.2010
(73) Proprietor: OGNIBENE POWER S.P.A., 42124 Reggio Emilia (IT)
(72) Inventor: Bigi, Paolo, 42100, REGGIO EMILIA (IT); Ferretti, Massimo, 42100, REGGIO EMILIA (IT)
(74) Representative: Corradini, Corrado

(56) References cited:
- WO-A1-97/47511
- DD-A1- 117 652
- DE-A1- 2 944 883
- DE-A1- 19 942 544
- US-A- 3 509 958
- US-B1- 6 386 312

## Description

The invention relates to a hydrostatic steering system of a type comprising two steering units, each of which has its own oil pump, distributor organ and doser.

In general, hydrostatic steering systems are used on vehicles or boats in order to facilitate steering operations when, while requiring high activating forces, comfort and safety are at a premium for the driver. Typical examples of this are tractors, agricultural machines, lift trucks, earth-moving machines, boats.

In a case of systems provided with a single steering unit, the unit comprises a hydraulic actuator which functions in two opposite directions, generally constituted by piston-cylinder group with through-stem, which is connected to the four-bar linkage of the steering.

The hydraulic actuator is supplied via a slide valve distributor which directs controlled quantities of hydraulic fluid to the actuator to which it is connected, which hydraulic fluid is pressurised and supplied by the respective pump, and directs the fluid coming from the actuator to the discharge.

In particular, the distributor can substantially take on three operating positions, in one of which, known as the neutral position, the pressurised fluid coming from the associated pump is sent directly to the discharge and thus the steering is not involved, while in both of the other two positions the pressurised fluid is sent to the hydraulic actuator which commands the steering in one direction or in the opposite direction, and the fluid coming from the hydraulic actuator is sent to the discharge.

In order to obtain this result the distributor devices are generally of the slide and jacket valve type and comprise two cylindrical bodies, sealedly coupled, which take on various relative angular positions. The internal body, commonly known as a slide, is axially hollow and is coupled to the steering wheel of the vehicle. The external body, commonly known as a jacket, is torsionally connected to the slide by elastic means, limitedly to first small rotations, and by rigid means for rotations going beyond the definition of small.

Both the slide and the jacket are provided with holes and axial channels distributed over their surfaces, which are well known to technical experts in the sector and which are located in reciprocal correspondence according to the relative angular position between the slide and the jacket.

The elastic means maintain the jacket and the slide in the relative position corresponding to the neutral position, while the activation of the steering wheel changes the relative reciprocal position of slide and jacket in order to direct the hydraulic fluid in one or the other direction corresponding to the two different steering directions.

The connection between the steering wheel shaft and the slide is rigid, while the connection between the slide and the jacket is elastic and consequently the activating of the steering wheel causes a staggering between slide and jacket which is maintained constant as long as the steering wheel is actually being turned, while when the rotation of the steering wheel stops the elastic means return the jacket and slide into original phase.

In known steering units the quantity of fluid sent to the actuator is controlled by an orbital dosing device, known as a gerotor, the rotor of which is connected to the jacket of the distributor.

In this arrangement, the rotations of the gerotor device correspond to the rotations of the jacket, which is elastically connected to the steering wheel.

The gerotor has the function of enabling passage of a dosed quantity of liquid for each rotation of the rotor. In particular, a gerotor unit is formed by an external stator having N lobes and an internal rotor having N-1 lobes, and which is obviously eccentric with respect to the outer body. During the functioning cycle, little chambers are created between the external body, or stator, and the internal rotor, a volume of which little chambers varies in order to aspirate and expel the liquid.

In this way, as long as the steering wheel of the vehicle continues to be rotated in a direction or the other, the fluid continues to be supplied by the distributor device to the hydraulic actuator which activates the steering in quantities controlled by the gerotor, and the wheels continue to change direction.

When the steering wheel is held stationary, the controlled supply to the hydraulic actuator ceases and the wheels maintain their steered position.

For reasons of safety, today there is widespread use of two steering units, i.e. systems in which the main components are duplicated. In particular, in these systems each of the steering units is destined to act on the respective hydraulic actuator in order to activate the steering.

Document DE 29 44 883 C2, which corresponds to the preamble of claim 1, discloses hydrostatic steering systems in which the main components are duplicated for reasons of safety, making available two steering units in parallel.

In these systems the shaft of the steering activates, via a gear transmission system, two branch shafts, each of which is coupled to a distributor device and the relative gerotor.

This arrangement makes the system subject to problems of synchrony between the two steering units, due to the inevitable play present in the mechanical coupling between the steering shaft and the two branch shafts.

Under normal conditions the two steering units both function, and their activation requires a relatively high torque couple.

In systems of this type, in case of malfunctioning of one of the two steering units, the other works for both, but the changeover to a single steering unit might make the vehicle's handling inaccurate or imprecise.

Document US 6 386 312 illustrates a steering system which also includes two steering units connected up in parallel, each comprising a pump and a distributor of the jacket type and a gerotor, in which the two distributors share the same jacket and the same slide, connected in rotation to the steering shaft, on which both rotors of the respective gerotors are keyed by means of a complicated intermediate mechanism.

However, these systems exhibit the problem that the jacket and the slide are necessarily very long because they have to involve all the parts of the device and by effect of this length the hydraulic seal is problematic due to the inevitable various plays that exist.

A common characteristic of all the known systems comprising two steering units is that for reasons of hydraulic and mechanical connection, jacket distributors have to be adjacent to and in contact with respective gerotors.

An aim of the present invention is to obviate the above-mentioned drawbacks, with a hydrostatic steering system comprising two steering units and which does not suffer from the problems typifying the prior art.

A further aim of the present invention is that it realises a hydrostatic steering system which does not exhibit components whose length can give rise to hydraulic seal problems.

A final aim of the invention is a system which exhibits a comparatively small number of mechanical connections among its components.

These aims are attained with a system having the characteristics recited in the independent claim.

Further characteristics of the invention can be found in the dependent claims.

The hydraulic steering system for vehicles of the invention is of a type comprising two steering units which are arranged in parallel to one another and comprising a pump, a distributor device of the jacket and slide type, associated to a respective gerotor dosing device, and a double-acting actuator device supplied by hydraulic fluid coming from the respective distributor device.

The actuator devices of the two units are mechanically connected to one another and to the steering linkage of the vehicle, the slides of the distributor devices are solidly constrained in rotation and at least one of them is constrained in rotation to the steering shaft and the respective rotor by rigid means, and to the respective jacket by elastic means.

In the invention the two distributor devices are identical and form, together with the gerotor doser devices, a single block in which the two doser devices are adjacent to one another and one of them is adjacent and hydraulically connected to the respective distributor device while the other is located at a distance from, and is hydraulically connected to, the respective distributor device.

The four devices which make up the block are held together by a series of connecting screws which are equal in number to the cavities of the stator of the orbital distributors.

The characteristics and advantages of the invention will emerge from a reading of the following description, provided by way of non-limiting example with the aid of the figures of the accompanying drawings, in which:
figure 1 is a diagram of the hydrostatic steering device circuit of the invention, in neutral position;
figure 2 is a diagram of the circuit of the hydrostatic steering device of figure 1, in a steering position;
figure 3 is a view from above of the steering system of the invention, limited to the distributors and the dosers;

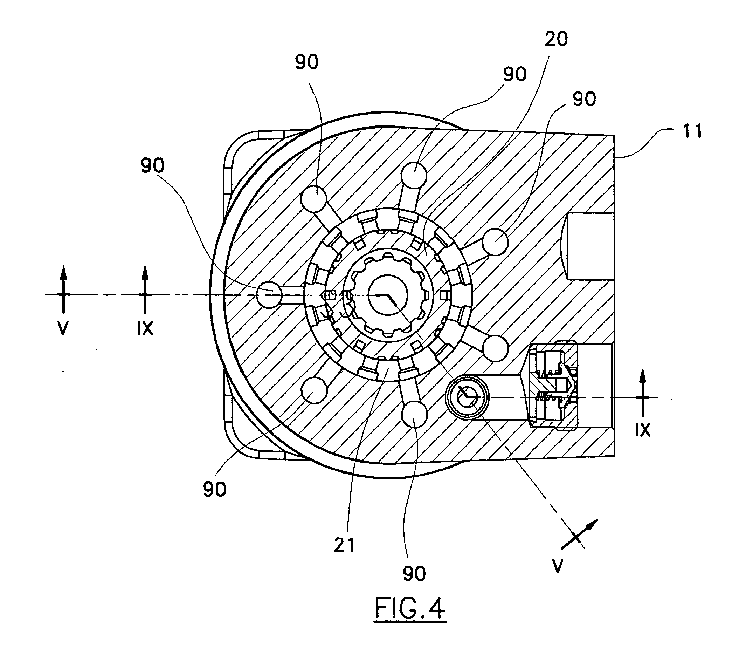

figure 4 is section IV-IV of figure 3;
figure 5 is section V-V of figure 4;
figure 5a is a portion of figure 5 is larger scale;

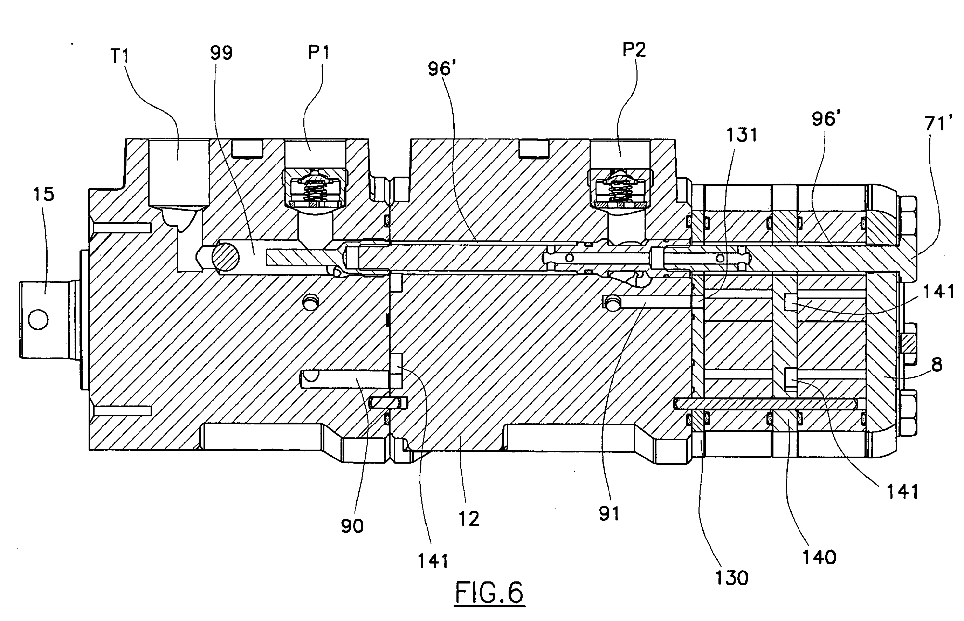

figure 6 is section VI-VI of figure 3;

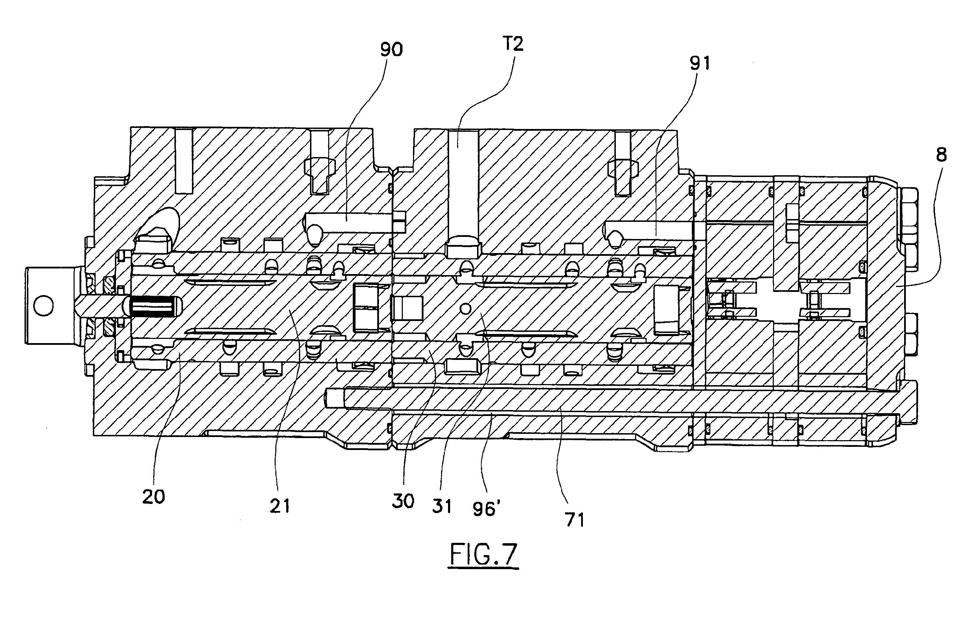

figure 7 is section VII-VII of figure 3;

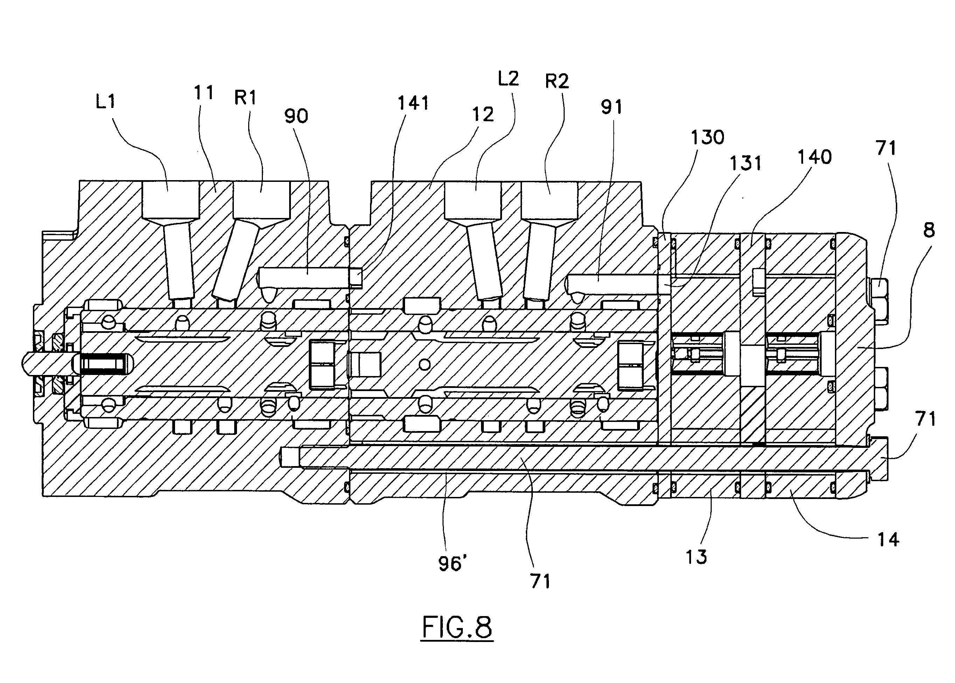

figure 8 is section VIII-VIII of figure 3;

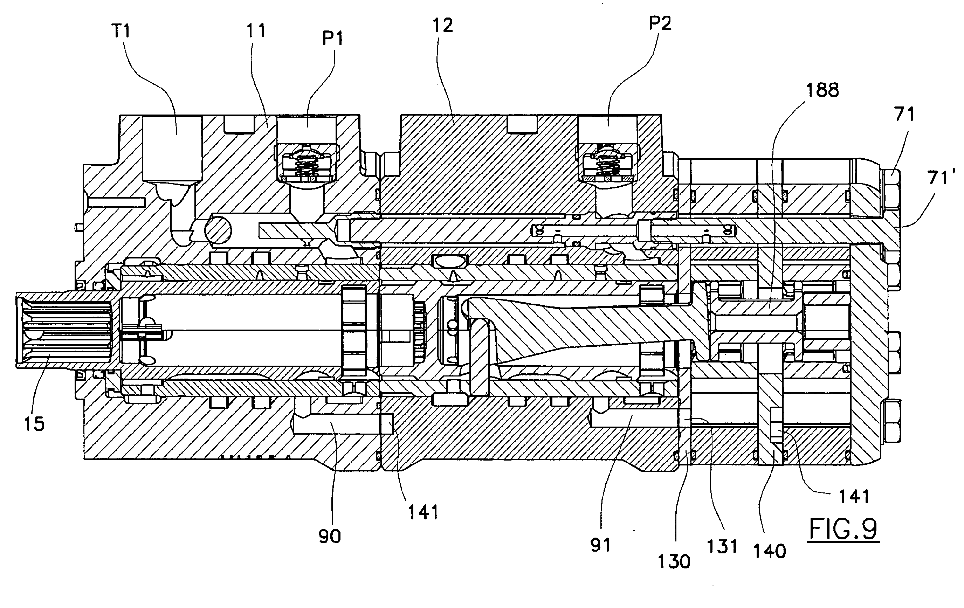

figure 9 is section IX-IX of figure 4;
figure 10 is section X-X of figure 3;
figure 11 is section XI-XI of figure 3.

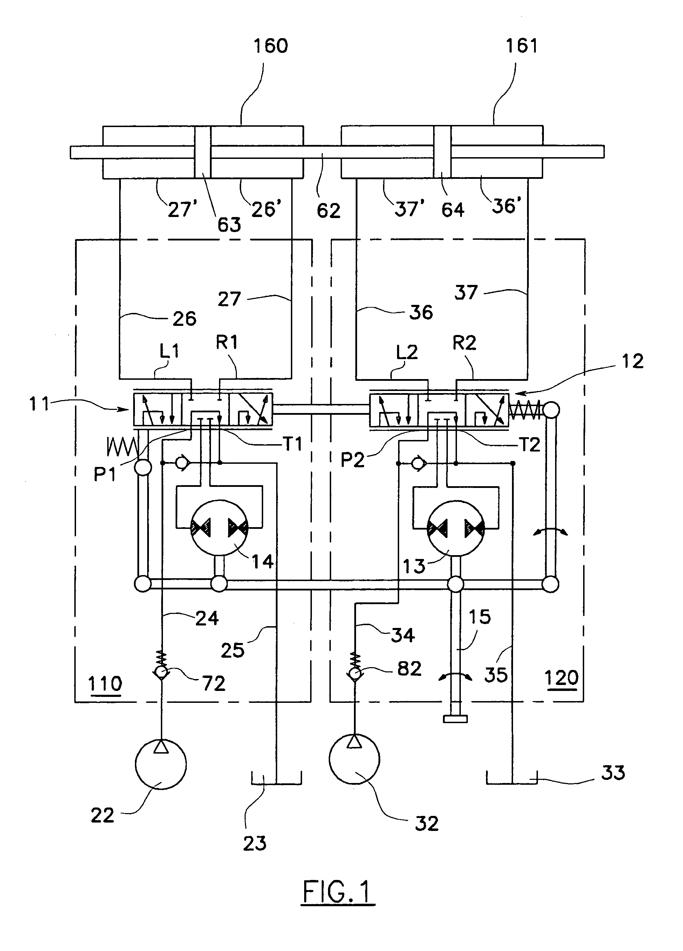

Figure 1 shows a diagram of the hydraulic circuit of the hydrostatic steering system of the invention which exhibits a first 100 and a second 120 steering unit, which are arranged in parallel to one another.

The steering units each exhibit a jacket distributor device respectively 11, 12 to which a gerotor, 13, 14, is associated.

The rotors of each of the gerotors and the slides of each of the jacket distributors are connected in rotation to one another and to the steering wheels, via 15.

From the point of view of hydraulic connections, the jacket distributor device 11 includes an inlet P1 connected by a line 24 to a first pump 22 and an outlet T1 connected by a line 25 to a first tank 23, while two outlets L1 and R1 are included, respectively connected by conduits 26 and 27 to the two chambers, right and left 27', 26', of a first double-acting actuator cylinder 160 which acts on the vehicle steering.

Similarly, the distributor device 12 includes an inlet P2 connected by a line 34 to a second pump 32 and an outlet T2 connected by a line 35 to a second tank 33, while two outlets L2 and R2 are included which are respectively connected via conduits 36 and 37 to the two chambers, right and left, 37' and 36', of a second double-acting actuator cylinder 161, also acting on the vehicle steering. The two double-acting cylinders each exhibit a piston 63, 64; the two pistons are located on the same through-stem 62.

Each of the distributor devices 11, 12 is associated to a respective gerotor dosing device 13, 14.

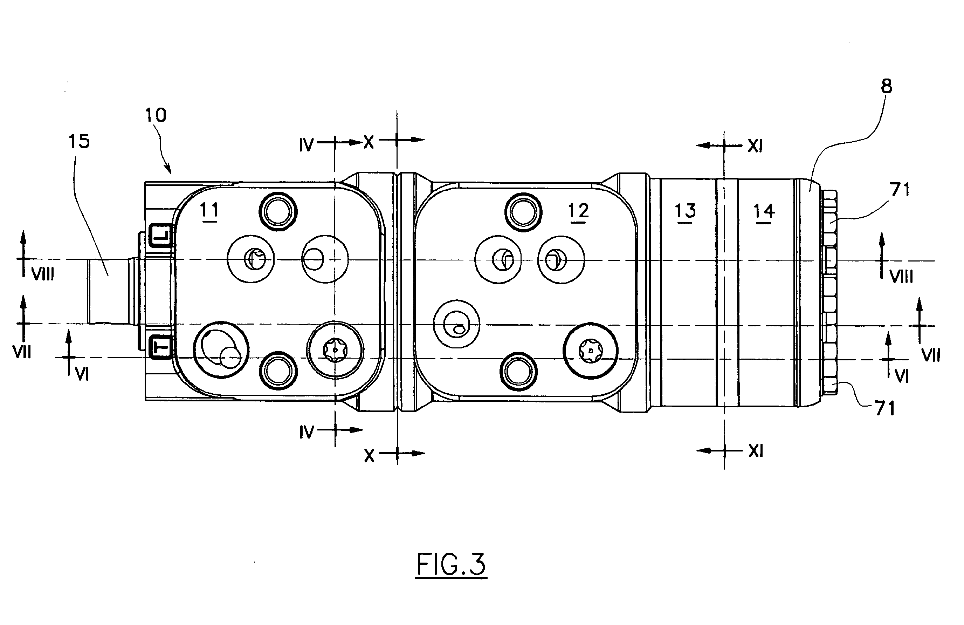

The hydraulic connection, in the embodiment which will be described in greater detail herein below, is however realized such that the first distributor device 11 is connected hydraulically to the second gerotor 14, while the second distributor device 12 is connected hydraulically to the first gerotor 13 (figure 3).

It is stressed that these two hydraulic connections are independent of one another, as they configure two completely separate hydraulic circuits, such that if one of them develops a hydraulic fault, the other can continue to function independently of the other.

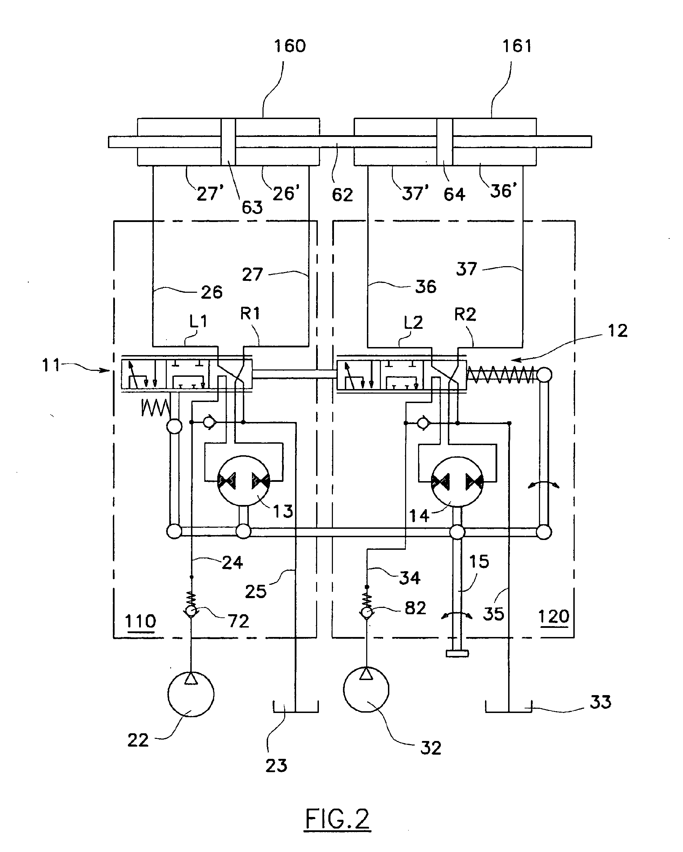

Figure 1 shows the diagram of the hydraulic circuit when the system is in neutral position, while figure 2 shows the diagram of the circuit of figure 1 when the system is in the steering position.

In this case, for each distribution device, during the normal functioning of the invention, the fluid pumped by each of the pumps, via the relative rotation of the jacket and the slide, is sent to one of the two chambers of the respective double-acting cylinder, after being dosed by the gerotor device.

Figure 2, in particular, represents a case in which the pressurised fluid is sent to the branch 27 of the first steering unit, and to the branch 37 of the second steering unit.

The distribution units, in the position represented, connect in discharge the branches 26 and 25 and respective 36 and 35, enabling the vehicle to be steered.

The circuit also exhibits two one-way valves 72 and 82, of known type, for preventing return of hydraulic fluid towards the respective pumps 22, 32.

Each hydraulic circuit can also comprise a normal and known anticavitation circuit inserted on the supply lines to the actuator of the steering; this enables oil to be aspirated from the tank of the respective circuit should the actuator cylinder be subjected to unexpected loads, thus preventing formation of a vacuum (cavitation) internally thereof.

The anticavitation circuit is not illustrated as it is not involved with the invention.

The same can be said for the known anti-shock treatment which enables the pressure in the oil pipes to be limited, created following impacts: in case of impacts, the overpressure created opens a valve and discharges the oil.

Each of the two hydraulic circuits illustrated also exhibits a usual maximum pressure valve, of known type: should the steering wheel be continued to be rotated when the steering actuator has reached its endrun position, the corresponding valve opens, placing the circuit in discharge mode.

With reference to figures 3 and following, the hydrostatic steering system includes, from the mechanical point of view, a block having a closing lid 8 in which a group of screws 71 is inserted, which screws 71 have the function of connecting up the two gerotors 13, 14 and the two distributor devices 11, 12 in the single block. The block 10, whose elements are mechanically connected up to one another, is coupled to the steering wheel of the vehicle via the connection 15 where the steering shaft is engaged.

More precisely, it is observed that the jacket 20 is inside the distributor device 11, and the slide 21 is sealedly located internally of the jacket 20.

The steering wheel is rigidly connected to the slide 21 by means of the connecting element 15, while the jacket 20 is torsionally connected to the slide by elastic means, in particular a group of leaf springs 17, which enable limited rotations.

By rotating the steering wheel in one direction or another, a limited relative rotation can be obtained between the jacket 20 and the slide 21.

The slide 21 and the jacket 20 further exhibit a series of holes and grooves, of known type, which enable the two combinations of hydraulic connection to be made for steering to the right and to the left inasmuch as they are set in reciprocal correspondence according to the relative angular position between the slide 21 and the jacket 20.

They are not described in detail as they are well known to experts in the sector.

The distributor device 12 is similar to the one previously described and is located adjacently to the distributor unit 11.

It comprises a jacket 30 and a slide 31, the slide being located internally of the jacket 30.

The slide 31 is torsionally connected to the slide 21, while the jacket 30 is connected to the jacket 20.

Internally the two steering units are hydraulically independent, thanks also to the presence of a wall 92 which keeps the axial cavities of the two slides 21 and 31 separate.

The combination of the elements 20, 21 and 30, 31 configures, for each distribution device, a distributor valve having a cylindrical slide which in the hydraulic diagram of figures 1 and 2 is respectively denoted by 11, 12.

In the present invention a mechanical connection is realised between the slides of the distribution devices such that the rotation of the steering shaft is also transferred to the slide 31.

In the hydrostatic steering system of the invention, the two distribution devices 11, 12 are adjacent to one another, and thus the respective gerotor devices 13 and 14 are in reciprocal contact, only one of them being in contact with the respective distribution unit 12.

The rotor of the gerotor 13 adjacent to the respective distribution unit 12 is connected to the jacket 30 of the distribution unit 12 via the known oscillating con rod 60, while the rotors of the two gerotor devices 13 and 14 are coaxial, in phase and mechanically connected in rotation by the mechanical connection element 188.

Thus the rotations of both gerotors correspond to the rotation of the steering wheel.

Each gerotor is formed by a seven-lobe external stator 40, 50 and a six-lobe internal rotor 41, 51 which rolls internally of the stator.

The indicated number of lobes is purely illustrative and not limiting, since realisations are possible which have a different number of lobes, as long as the internal rotor has N-1 lobes if the external stator has N lobes.

The body of the gerotor 13 is connected to the adjacent distribution unit 12 by an interposed plate 130.

The plate 130 exhibits seven holes 131 located at the gullies between the lobes of the rotator of the gerotor 13; the holes 131 are located at seven conduits 91, afforded in the body of the distributor device 12 and opening against the jacket 30 of the distribution device 12.

The holes are set in communication with one or the other side of the actuator cylinder 161 of the steering through usual holes in the jacket and axial grooves in the slide. The gullies between the lobes of the stator of the gerotor device 13 are therefore in direct communication, via the plate 130, with the jacket of the distribution device 12.

The hydraulic connection between the body of the doser device 14 and the distribution device 11 distanced therefrom is realised as follows.

A plate 140 is located between the body of the doser device 14 and the body of the gerotor 13.

The plate 140 exhibits seven blind holes 141 located at the gullies between the cogs of the external body of the gerotor.

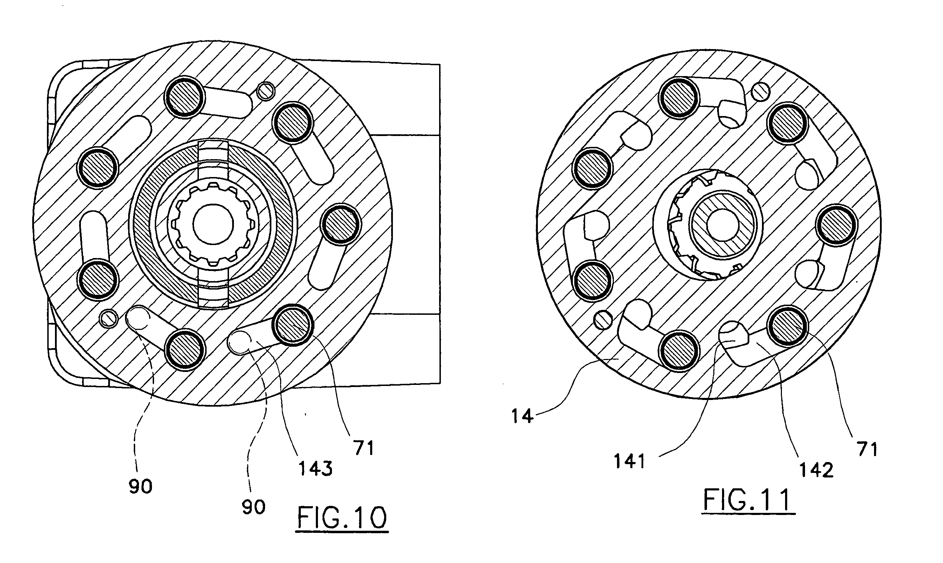

Each of the blind holes 141, through a bean-shaped blind gully 142 (figure 11) is in turn in communication with the space between the screws 71 and the respective containing hole.

The stem of the screws 71 is, as mentioned, conformed such as to leave a space between the stem 71 and the containing hole; the oil directed to the distribution device 11 passes through this hole.

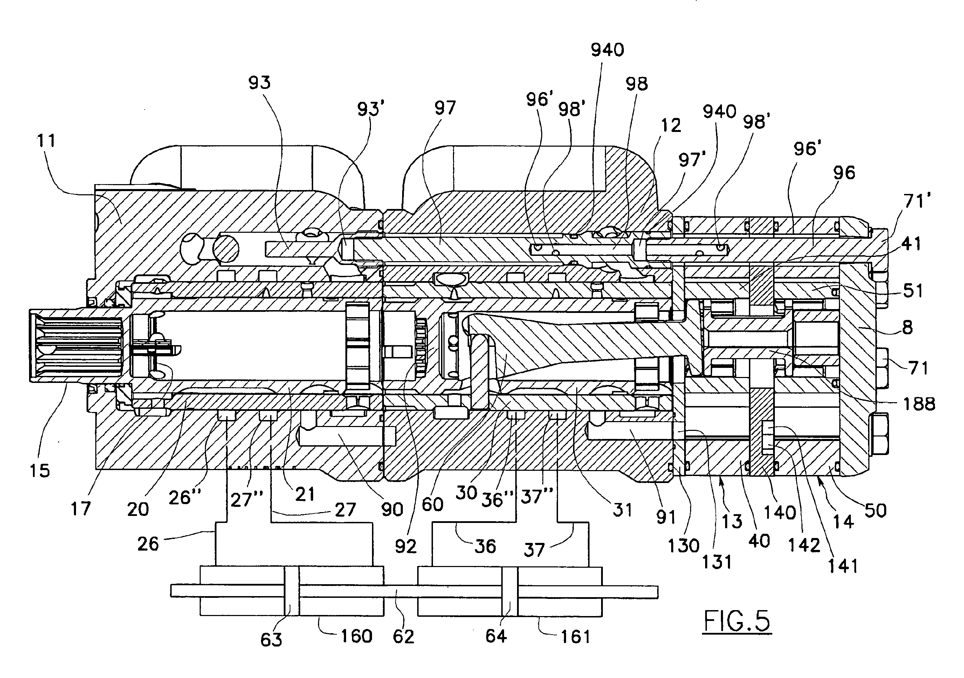

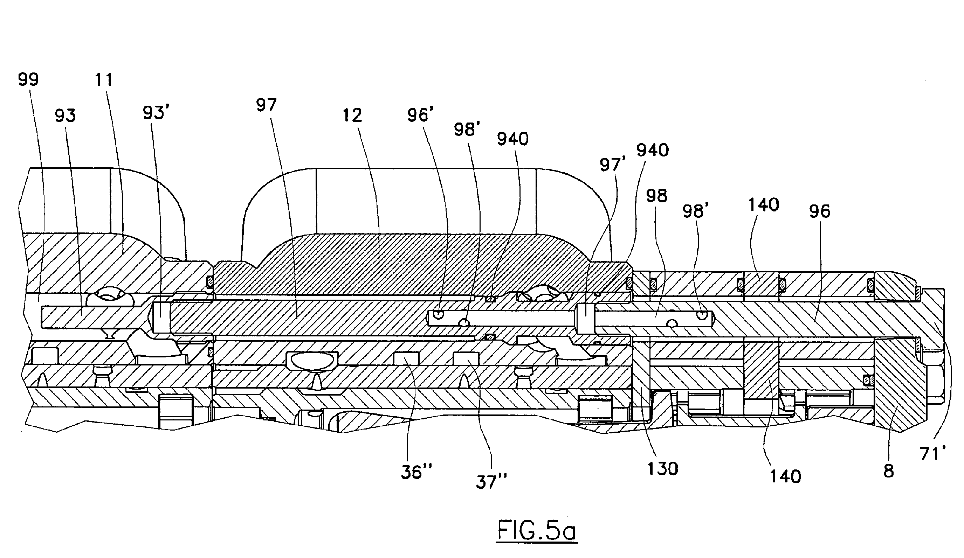

Blind gullies 143 are afforded on the surface of the body of the distribution unit 12 which contactingly faces the surface of the body of the distribution device 11, which gullies 143 are similar to the gullies 142 (see figure 10) which set the containing seating of the screws 71 in communication with the end of a same number of conduits 90 (see figure 5) opening against the jacket 20 of the distribution device 11.

The conduits 90 are closed or set in communication with one or the other side of the actuator cylinder 160 of the steering through a hole in the jacket and an axial groove.

The above construction is not however possible for all the screws 71, which as mentioned must cross the lobes of the stator, since at least one of them also crosses at least one of the conduits which place the jacket of the distribution device 12 in communication with the outside.

At the crossing of the conduit the space between the screws 71 and the holes, making possible the connection, is lost.

This drawback is obviated in the invention by the fact that at least one 71' of the screws 71 located at or near the conduits of the body of the distribution device 12 opening to the outside has a special shape.

The screw 71' is made up of three parts, precisely: starting from the end thereof which involves the distributor device 11 it comprises a first part 93 destined to screw into the body of the distribution device 11, opening into the chamber 99 into which the conduit coming from the oil pump opens.

The first part 93 is provided with an axial seating 93' destined to receive, by screwing, the threaded end of the second part 97 which substantially crosses the body of the distribution device 12, which is in turn provided with an axial cavity 97' destined to receive, by screwing, the threaded end of the third part 96 which crosses the body of both the gerotors 13 and 14, and terminates with the hexagonal head for engaging with the fastening key.

The stem 97 of the screw 71' has a smaller diameter than the diameter of its own containing hole over almost all the length thereof, leaving the space 96' which connects the gerotor 14 to the distribution device 11 free.

The space 96' is interrupted in the terminal portion of the second part 97 which is sealedly inserted in the hole with the help of the seals 940.

The continuity of the hydraulic communication at the terminal portion of the second part 97 is guaranteed by the axial hole 98, which involves both the first part 96 and the second part 97 and opens, via the diameter holes 98', into the space, crossing the conduit opening towards the outside.

This configuration enables the first distribution device 11 to isolatedly hydraulically supply the second gerotor 14.

Finally, in each of the bodies 17, 18 of the steering unit 11, 12 passages are afforded 26", 27" (and 36" and 37") for the hydraulic fluid directed to the left chamber and the right chamber of the first actuator cylinder 160 and respectively of the second actuator cylinder 161.

Obviously modifications or improvements can be made to the invention as it is described, dictated by contingent or particular reasons, without its forsaking the ambit of the invention as claimed herein below.

## Claims

1. A hydraulic steering system for vehicles, of a type comprising two steering units, arranged in parallel and each comprising a pump (22, 32), a first and a second distribution device (11, 12) of a jacket (20, 30) and slide (21, 31) type, associated to a respective first and second orbital doser device (13, 14), and a first and second double-acting actuator supplied by hydraulic fluid coming from the respective distribution device, each forming a steering unit which is hydraulically independent of the other, in which the actuator devices are mechanically connected to one another and to the vehicle steering, and at least one of the slides of the distribution devices is constrained in rotation to the shaft of the steering wheel by rigid means, to the respective jacket by elastic means, and to the respective rotor by elastic means, and in which the rotors of the doser devices are identical to the respective rotors arranged in phase and constrained in rotation,
**characterised in that**
the two distributor devices (11, 12) are identical and form, with the respective dosers (13, 14), a single block (10) in which the two doser devices are adjacent to one another and one of the doser devices (13) is adjacent and hydraulically connected to the respective distribution device (12) and the other of the doser devices (14) is located at a distance from and is hydraulically connected to the respective distribution device (11), the distribution devices and the dosers being held all together to form a single block by a series of connecting screws (71) which are equal in number to the lobes of the stator of the orbital doser devices.

2. The system of claim 1, **characterised in that** the jacket of the second distribution device is mechanically connected in rotation by an oscillating con rod to the rotor of the first doser device adjacent thereto.

3. The system of claim 1, **characterised in that** at least a portion of the connecting screws is contained in a seating having a greater diameter in order to make available a passage space for the oil between the distributor device and the respective doser device located at a distance.

4. The system of claim 1, **characterised in that** the distribution devices of each of the two steering units (11, 12) are mechanically connected to one another and **in that** a hydraulic circuit is provided for each of the combinations between the distribution device and the respective orbital doser device, which hydraulic circuits are independent.

5. The system of claim 1, **characterised in that** at least one of the connecting screws of the elements of the device exhibits a plurality of portions having differentiated sections, made up by a first portion (96) which is contained internally of a larger seating such as to form the first annular chamber (96') which involves the block of the two orbital doser devices and of the plate located between the two dosers at which the first portion sealedly passes, and which first portion also exhibits an axial hole (98) and a radial hole (98'); a second intermediate portion (94), also provided with an axial hole (95) in axial alignment with the hole (98) and a radial hole (95') and having a tract in proximity of an end associated to annular sealing means (940), and a further tract (97), contained internally of a larger seating such as to form a second annular chamber (97') and which in part extends internally of the first distribution device (11) and terminates with a third terminal portion (93) that defines a chamber (99) in cooperation with the body of the first distribution device (11).

6. The system of claim 1, **characterised in that** the first and/or the second orbital doser device (13, 14) comprises an external stator device (40, 50) having N lobes and an internal rotor (41, 51) having N-1 lobes.

## Patentansprüche

1. Hydraulisches Fahrzeuglenksystem der Art, die zwei Lenkeinheiten umfasst, die parallel angeordnet sind und jeweils eine Pumpe (22, 32) umfassen, eine erste und eine zweite Verteilervorrichtung (11, 12) von der Art mit Ummantelung (20, 30) und Gleitstück (21, 31), die mit einer entsprechenden ersten und zweiten Zahnringpumpe (13, 14) verbunden sind, und einen ersten und einen zweiten doppelt wirkenden Stellantrieb, in den ein Hydraulikfluid eingespeist wird, das von der entsprechenden Verteilervorrichtung kommt, die jeweils eine Lenkeinheit bilden, die von der jeweils anderen hydraulisch unabhängig ist, wobei die Stellvorrichtungen miteinander und mit der Fahrzeuglenkung mechanisch verbunden sind und mindestens eines der Gleitstücke der Verteilervorrichtungen durch starre Mittel in Rotation an der Welle des Lenkrades befestigt ist, an der entsprechenden Ummantelung durch elastische Mittel und am entsprechenden Rotor durch elastische Mittel und wobei die Rotoren der Zahnringpumpen identisch mit den entsprechenden Rotoren sind, die in Phase angeordnet und in Rotation befestigt sind,
**dadurch gekennzeichnet, dass**
die zwei Verteilervorrichtungen (11, 12) identisch sind und mit den entsprechenden Zahnringpumpen (13, 14) einen einzigen Block (10) bilden, in dem die zwei Zahnringpumpen aneinander angrenzen und eine der Zahnringpumpen (13) an die entsprechende Verteilervorrichtung (12) angrenzt und mit dieser hydraulisch verbunden ist und die andere der Zahnringpumpen (14) in einem Abstand von der entsprechenden Verteilervorrichtung (11) angeordnet und mit dieser hydraulisch verbunden ist, wobei die Verteilervorrichtungen und die Zahnringpumpen von einer Reihe von Verbindungsschrauben (71) zusammengehalten werden, um einen Block zu bilden, deren Anzahl gleich der der Nocken des Stators der Zahnringpumpen ist.

2. System nach Anspruch 1, **dadurch gekennzeichnet, dass** die Ummantelung der zweiten Verteilervorrichtung durch eine schwingende Pleuelstange mechanisch in Rotation mit dem Rotor der ersten daran angrenzenden Zahnringpumpe verbunden ist.

3. System nach Anspruch 1, **dadurch gekennzeichnet, dass** mindestens ein Abschnitt der Verbindungsschrauben in einer Aufnahme befestigt ist, die einen größeren Durchmesser aufweist, um zwischen der Verteilervorrichtung und der entsprechenden, in einem Abstand angeordneten Zahnringpumpe einen Durchtrittsraum für das Öl zu ermöglichen.

4. System nach Anspruch 1, **dadurch gekennzeichnet, dass** die Verteilervorrichtungen (11, 12) jeder der zwei Lenkeinheiten mechanisch miteinander verbunden sind und dadurch, dass für jede der Kombinationen zwischen der Verteilervorrichtung und der entsprechenden Zahnringpumpe ein Hydraulikkreislauf bereitgestellt ist, wobei die Hydraulikkreisläufe eigenständig sind.

5. System nach Anspruch 1, **dadurch gekennzeichnet, dass** mindestens eine der Verbindungsschrauben der Elemente der Vorrichtung mehrere Abschnitte mit unterschiedlichen Sektionen aufweist, bestehend aus einem ersten Abschnitt (96), der intern in einer größeren Aufnahme enthalten ist, so dass die erste ringförmige Kammer (96') gebildet wird, welche den Block der zwei Zahnringpumpen und der zwischen den zwei Zahnringpumpen angeordneten Platte einbezieht, durch welche der erste Abschnitt abgedichtet durchtritt, und wobei der erste Abschnitt außerdem eine axiale Öffnung (98) und eine radiale Öffnung (98') aufweist, aus einem zweiten mittleren Abschnitt (94), der ebenfalls mit einer axialen Öffnung (95) in axialer Flucht mit der Öffnung (98) und mit einer radialen Öffnung (95') ausgestattet ist und einen Teil nahe einem Ende aufweist, der mit ringförmigen Dichtungsmitteln (940) verbunden ist, und einen weiteren Teil (97), der intern in einer größeren Aufnahme gehalten ist, so dass eine zweite ringförmige Kammer (97') gebildet ist, und der sich teilweise in der ersten Verteilervorrichtung (11) erstreckt und der in einem dritten Endabschnitt (93) endet, der im Zusammenspiel mit dem Körper der ersten Verteilervorrichtung (11) eine Kammer (99) definiert.

6. System nach Anspruch 1, **dadurch gekennzeichnet, dass** die erste und/oder die zweite Zahnringpumpe (13, 14) eine externe Statorvorrichtung (40, 50) mit N Nocken und einen internen Rotor (41, 51) mit N-1 Nocken umfasst bzw. umfassen.

## Revendications

1. Système de direction hydraulique pour véhicules d'un type comprenant deux unités de direction agencées en parallèle et comprenant chacune une pompe (22, 32), des premier et deuxième dispositifs de distribution (11, 12) de type chemise (20, 30) et glissière (21, 31), associés à des premier et deuxième dispositifs de dosage orbitaux respectifs (13, 14), et des premier et deuxième actionneurs à double action alimentés en fluide hydraulique provenant du dispositif de distribution respectif, formant chacun une unité de direction hydrauliquement indépendante de l'autre, dans lequel les dispositifs actionneurs sont connectés mécaniquement entre eux et à la direction du véhicule, et au moins une des glissières des dispositifs de distribution est contrainte en rotation à l'axe du volant de direction par un moyen rigide, à la chemise respective par un moyen élastique, et au rotor respectif par un moyen élastique, et dans lequel les rotors des dispositifs de dosage sont identiques aux rotors respectifs agencés en phase et contraints en rotation,
**caractérisé en ce que**
les deux dispositifs distributeurs (11, 12) sont identiques et forment, avec les doseurs respectifs (13, 14), un seul bloc (10) dans lequel les deux dispositifs de dosage sont adjacents entre eux et un des dispositifs de dosage (13) est adjacent au dispositif de distribution respectif (12) et connecté hydrauliquement à celui-ci, et l'autre dispositif de dosage (14) est agencé à une certaine distance du dispositif de distribution respectif (11) et connecté hydrauliquement à celui-ci, les dispositifs de distribution et les doseurs étant tous maintenus ensemble pour former un seul bloc avec une série de vis de connexion (71) qui sont égales en nombre aux lobes du stator des dispositifs de dosage orbitaux.

2. Système selon la revendication 1, **caractérisé en ce que** la chemise du deuxième dispositif de distribution est connectée mécaniquement en rotation par une barre oscillante au rotor du premier dispositif de dosage adjacent à celui-ci.

3. Système selon la revendication 1, **caractérisé en ce qu'**au moins une partie des vis de connexion est contenue dans un siège ayant un diamètre plus grand de manière à aménager un espace de passage pour l'huile entre le dispositif distributeur et le dispositif de dosage respectif situé à une certaine distance.

4. Système selon la revendication 1, **caractérisé en ce que** les dispositifs de distribution de chacune des deux unités de direction (11, 12) sont connectés mécaniquement entre eux et **en ce qu'**un circuit hydraulique est pourvu pour chacune des combinaisons entre le dispositif de distribution et le dispositif de dosage orbital respectif, ces circuits hydrauliques étant indépendants.

5. Système selon la revendication 1, **caractérisé en ce qu'**au moins une des vis de connexion des éléments du dispositif comporte une pluralité de parties ayant des sections différentiées, constituées d'une première partie (96) contenue dans un siège plus grand de manière à former la première chambre annulaire (96') qui comporte le bloc des deux dispositifs de dosage orbitaux et de la plaque située entre les deux doseurs où la première partie passe de manière étanche, ladite première partie comportant aussi un trou axial (98) et un trou radial (98') ; une deuxième partie intermédiaire (94), également pourvue d'un trou axial (95) en alignement axial avec le trou (98) et d'un trou radial (95'), et comportant une région à proximité d'une extrémité associée à un moyen d'étanchéité annulaire (940), et une autre région (97), contenue dans un plus grand siège de manière à former une deuxième chambre annulaire (97') et qui s'étend en partie vers l'intérieur du premier dispositif de distribution (11) et termine en une troisième partie terminale (93) qui définit une chambre (99) en coopération avec le corps du premier dispositif de distribution (11).

6. Système selon la revendication 1, **caractérisé en ce que** les premier et/ou deuxième dispositifs de dosage orbitaux (13, 14) comprennent un dispositif de stator externe (40, 50) comportant N lobes et un rotor interne (41,51) comportant N-1 lobes.
